# EUROPEAN PATENT SPECIFICATION

(11) **EP 0 597 238 B1**
(45) Date of publication and mention of the grant of the patent: **04.02.1998**
(21) Application number: 93115990.9
(22) Date of filing: 04.10.1993
(51) Int. Cl.: G01P 3/44

(54) **Retention device for sensors for measuring the mutual movement of two relatively rotating members**
Halteelement für Sensoren zur Messung der gegenseitigen Bewegung von zwei relativ zueinander drehbaren Teilen
Support pour capteurs afin de mesurer le mouvement mutuel relatif de deux pièces rotatives

(30) Priority: 13.11.1992 IT TO920270 U
(43) Date of publication of application: 18.05.1994
(73) Proprietor: SKF INDUSTRIE S.p.A., I-10123 Torino (IT)
(72) Inventor: Moretti, Roberto, I-10020 Cambiano (Torino) (IT); Cacciatore, Rolando, I-10042 Nichelino (Torino) (IT); Genero, Matteo, I-10026 Santena (Torino) (IT)
(74) Representative: Lotti, Giorgio

(56) References cited:
- CH-A- 580 812
- US-A- 5 010 290

## Description

This invention falls within the field of devices for measuring the mutual movement of two relatively rotating members, and can therefore be applied to rotary shafts transmitting vehicle motion, to electric motors, to hydraulic motors and to many other systems.

In particular, the invention relates to a retention device for the measurement sensor.

Modern devices of the aforesaid type installed in proximity to the bearing races comprise essentially two basic components, namely a phonic wheel and a measurement sensor.

The phonic wheel is commonly a toothed ring or a multi-pole magnetized ring mounted on the rotating part to be kept under control. The sensor, consisting of a coil and a flux concentrator (passive) or a Hall cell or a magnetoresistor (active), is incorporated into a sensor carrier. When in use, the sensor must not rotate and faces the phonic wheel at a predetermined distance therefrom, which has to be maintained constant with time. In addition the sensor must maintain good planarity with respect to the phonic wheel.

The electrical signals generated by the sensor are processed by an external electronic circuit positioned remotely from the bearing, to measure the particular physical quantity to be controlled, namely the relative speed of rotation of the two parts, the mutual angular movement the direction of rotation or the acceleration. Other arrangements have also been used to mount the sensor, such as providing sensor carriers with toothed annular appendixes which are coupled directly to the outer race of the bearing. It has however been noted that with the use the sensor becomes misaligned and is subject to separation. In another arrangement, one side of the non-rotating race is extended to form a coupling appendix to the sensor. However, these represent costly and individual expedients which cannot be adapted to all the aforesaid applications.

CH-A-580 812 discloses a retention device of substantially annular shape for a sensor coil measuring the mutual movement of the races of a rolling-contact bearing. The retention device is secured to the non-rotating race of the bearing by bending an edge of said retention device into a circumferential groove provided in an axial end portion of said non-rotating bearing race.

A retaining device for securing a plug-like sensor to the fixed race of the bearing is known from US-A-5 010 290.

It is an object of the present invention to provide a device which allows the sensor to be quickly mounted on the non-rotating race of the bearing by a very simple operation.

In accordance with the invention, the above and further objects are accomplished by the provision of a retention device as claimed in claim 1.

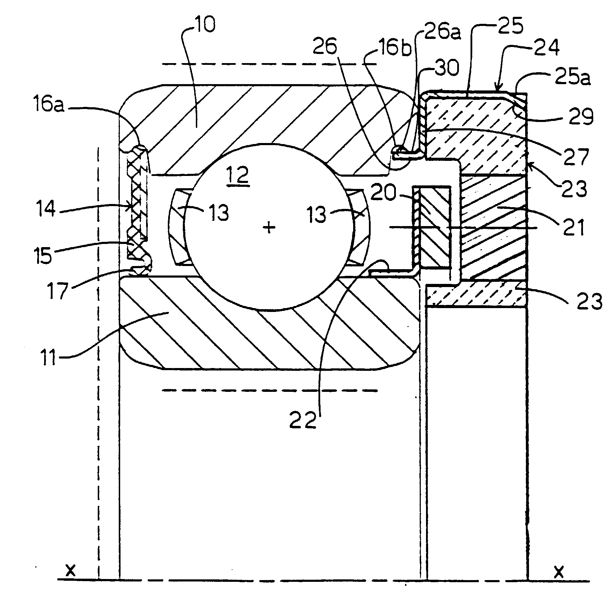

The structural and functional characteristics of a preferred but not exclusive embodiment of the device according to the invention are described hereinafter with reference to the accompanying drawing, representing a schematic axial section through a rolling-contact bearing to which the device of the present invention is applied.

With reference to the figure, a ball bearing, of conventional type and therefore described only briefly hereinafter, consists of a non-rotating race 10, a rotating race 11 and a ring of balls 12 interposed between the two races and maintained a constant distance apart by a retention cage 13.

On one side of the bearing (the left side on the drawing) there is provided a protective shield 14 fitted with a rubber gasket 15.

The shield 14 is mounted on the non-rotating ring 10 by insertion into an appropriate circumferential groove 16a with its concavity facing the axis of rotation x of the bearing. The shield 14 when positioned in this manner causes a lip 17 of the gasket 15 to slide on the surface of the rotating race 11 to prevent infiltration of contaminants (water, dirt, mud) into the bearing.

Conventional bearings also comprise a second groove 16b identical to the groove 16a but provided on the other side of the bearing (the right side on the drawing). On this side of the bearing there is mounted a device for measuring the mutual movement of the two bearing races, consisting of a phonic wheel 20 and a measurement sensor 21 of the types described in the introduction to the present description. The phonic wheel 20 is mounted on the rotating race 11 by way of a metal screen 22, to be rotated with the race 11. The sensor 21 is fixed into an annular container or sensor carrier 23 rigid with the non-rotating race 10. This sensor carrier is suitably dimensioned such that the sensor 21 faces the rotating phonic wheel 20 when in use.

According to the invention, the measurement sensor 21 with the sensor carrier ring 23 is mounted on the non-rotating race 10 by a retention device 24, consisting of a cup advantageously formed of sheet metal.

As shown in the figure, this device is of substantially annular shape. It comprises a first cylindrical portion 25 of larger diameter and a second cylindrical portion 26 of smaller diameter coaxial to the first, they being joined together by a radial flat portion 27.

To mount the measurement device on the bearing, the cup 24 is firstly mounted on the non-rotating race 11 by inserting the cylindrical portion 26 into the front aperture 30; the edge 26a of the cylindrical portion 26 is bent into the groove 16b throughout its entire circumference by beading it so that it reproduces the shape of the groove. At this point the screen 22 with the phonic wheel 20 is mounted by forcing it onto the rotating race 11 of the bearing as an interference fit. After this the sensor carrier 23 with the sensor 21 is inserted into the cup 24 until it abuts against the flat portion 27, the edge 25a of the portion 25 then being bent onto the sensor carrier to securely lock it in position. For this purpose the sensor carrier ring 23 is formed with a frusto-conical taper 29, of which the edge 25a follows the shape.

The locking-together of the non-rotating race, the cup and the sensor carrier can obviously be achieved by other means (not described herein) alternative to that of the bent edge 25a but equally aimed at preventing relative rotation between these parts.

As will be apparent, the device of the invention is easily coupled to the non-rotating race of the bearing. In addition, the described mounting procedure ensures correct planarity between the phonic wheel and sensor notwithstanding the large tolerances with which the coupling groove is produced.

The invention is not limited to the described embodiment, which is to be considered as merely illustrative of the best method of implementing the invention, and is susceptible to modifications in terms of form, dimensions, arrangement of the parts and the constructional and operational details. In a further embodiment of the same invention, not shown, the cup comprises a toothed cylindrical portion instead of the continuous portion 26, the same advantages being attained. The invention is to be considered as embracing all modifications which lie within its scope, as defined by the following claims.

## Claims

1. A retention device (24) of substantially annular shape for sensors measuring the mutual movement of two relatively rotating members, such as the races of a rolling-contact bearing, of the type consisting of a phonic wheel (20) and a sensor coil (21) facing it, said sensor coil (21) being fixed in an annular sensor carrier ring (23) rigid with the non-rotating race (10), the retention device (24) in use being secured to the non-rotating race of the bearing by bending an edge of said retention device into a circumferential groove (16b) provided in the axial end portion of the non-rotating bearing race (10),
characterised in that said retention device is composed of a first, axially outer cylindrical portion (25) of larger diameter and a second, axially inner cylindrical portion (26) of smaller diameter coaxial to said first portion, said first and second portions being joined by a radial flat portion (27) so as to define a substantially cup-shaped annular seat for accommodating said annular sensor carrier ring (23); the axially inner edge (26a) of said axially inner cylindrical portion (26) being clinched in use in said circumferential groove (16b); the axially outer end (25a) of said first cylindrical portion (25) being bent onto said sensor carrier ring (23) so as to securely lock it.

2. A retention device as claimed in claim 1, wherein said axially outer bent end (25a) of said first cylindrical portion (25) has a frusto-conical shape copying a frusto-conical taper (29) formed in the axially outer part of said sensor carrier ring (23).

3. A retention device as claimed in claim 1, wherein said axially inner edge (26a) of said axially inner cylindrical portion (26) is clinched in said circumferential groove (16b) throughout its entire circumference so as to copy the shape of said groove.

## Patentansprüche

1. Halteelement (24) mit im wesentlichen ringförmiger Form für Sensoren zur Messung der gegenseitigen Bewegung von zwei relativ zueinander drehbaren Teilen, wie z.B. die Laufringe eines Wälzlagers, bestehend aus einem phonischen Rad (20) und einer ihm gegenüberliegenden Sensorspule (21), wobei die Sensorspule (21) in einem ringförmigen Sensorträgerring (23) befestigt ist, der fest mit dem nichtumlaufenden Ring (10) verbunden ist, wobei das Halteelement (24) im Gebrauch fest mit dem nichtumlaufenden Ring des Lagers verbunden ist, indem eine Kante des Halteelements in eine Umfangsnut (16b) gebogen wird, die in dem axialen Endabschnitt des nichtumlaufenden Lagerrings (10) vorgesehen ist,
dadurch gekennzeichnet,
daß das Halteelement aus einem ersten, axial äußeren zylindrischen Abschnitt (25) mit größerem Durchmesser und einem zweiten, axial inneren zylindrischen Abschnitt (26) mit kleinerem Durchmesser besteht, der koaxial zum ersten Abschnitt ist, wobei der erste und der zweite Abschnitt durch einen radialen flachen Abschnitt (27) so miteinander verbunden sind, daß sie einen im wesentlichen topfförmigen ringförmigen Sitz zur Aufnahme des ringförmigen Sensorträgerringes (23) definieren; die axial innere Kante (26a) des axial inneren zylindrischen Abschnitts (26) wird im Gebrauch in der Umfangsnut (16b) festgeklemmt; das axial äußere Ende (25a) des ersten zylindrischen Abschnitts (25) wird auf den Sensorträgerring (23) gebogen, um ihn sicher zu verriegeln.

2. Halteelement nach Anspruch 1,
dadurch gekennzeichnet,
daß das axial äußere gebogene Ende (25a) des ersten zylindrischen Abschnitts (25) eine kegelstumpfförmige Form hat, die eine kegelstumpfförmige Verjüngung (29) nachformt, die in dem axial äußeren Teil des Sensorträgerrings (23) gebildet ist.

3. Halteelement nach Anspruch 1,
dadurch gekennzeichnet,
daß die axial innere Kante (26a) des axial inneren zylindrischen Abschnitts (26) in der Umfangsnut (16b) über deren gesamten Umfang festgeklemmt ist, um die Form der Nut nachzuformen.

## Revendications

1. Dispositif de retenue (24) de forme sensiblement annulaire destiné à des capteurs mesurant le déplacement mutuel de deux éléments tournant l'un par rapport à l'autre, tel que les chemins d'un roulement, du type consistant en une roue phonique (20) et une bobine de capteur (21) lui faisant face, ladite bobine de capteur (21) étant fixée dans une bague annulaire de support de capteur (23) rigide avec le chemin non tournant (10), le dispositif de retenue (24), en fonctionnement, étant fixé au chemin non tournant du roulement en recourbant un bord dudit dispositif de retenue dans une gorge circonférentielle (16b) réalisée dans la partie d'extrémité axiale du chemin non tournant de roulement (10),
caractérisé en ce que ledit dispositif de retenue se compose d'une première partie cylindrique axialement externe (25) de plus grand diamètre et d'une seconde partie cylindrique axialement interne (26) de plus petit diamètre qui est coaxiale à ladite première partie, lesdites première et seconde parties étant réunies par une partie radiale plate (27) de manière à définir un siège annulaire sensiblement en forme de coupe destinée à recevoir ladite bague annulaire de support de capteur (23) ; le bord axialement interne (26a) de ladite partie cylindrique axialement interne (26) étant assujetti, en fonctionnement, dans ladite gorge circonférentielle (16b) ; l'extrémité axialement externe (25a) de ladite première partie cylindrique (25) étant recourbée sur ladite bague de support de capteur (23) de manière à la bloquer de façon assurée.

2. Dispositif de retenue selon la revendication 1, dans lequel ladite extrémité axialement externe recourbée (25a) de ladite première partie (25) présente une forme tronconique épousant un raccord réducteur tronconique (29) formé dans la partie axialement externe de ladite bague de support de capteur (23).

3. Dispositif de retenue selon la revendication 1, dans lequel ledit bord axialement interne (26a) de ladite partie cylindrique axialement interne (26) est assujetti dans ladite gorge circonférentielle (16b) sur toute sa circonférence de manière à épouser la forme de ladite gorge.
